# EUROPÄISCHE PATENTSCHRIFT

(11) **EP 2 914 490 B1**
(45) Veröffentlichungstag und Bekanntmachung des Hinweises auf die Patenterteilung: **24.05.2017**
(21) Anmeldenummer: 13811348.5
(22) Anmeldetag: 22.10.2013
(51) Int. Cl.: B64C 39/02, B64D 27/02, B64D 27/24, B64D 31/00, B64D 41/00, F02D 29/02

(54) **UNBEMANNTES LUFTFAHRZEUG UND BETRIEBSVERFAHREN**
UNMANNED AERIAL VEHICLE AND METHOD OF OPERATION
AÉRONEF SANS PILOTE ET PROCÉDÉ PERMETTANT DE FAIRE FONCTIONNER LEDIT AÉRONEF

(30) Priorität: 31.10.2012 DE 102012021339
(43) Veröffentlichungstag der Anmeldung: 09.09.2015
(73) Patentinhaber: AIRBUS DEFENCE AND SPACE GMBH, DE-85521 Ottobrunn (DE)
(72) Erfinder: STEINWANDEL, Jürgen, 88690 Uhldingen-Mühlhofen (DE); STAGLIANO, Florian, 81371 München (DE); VAN TOOR, Jan, 81739 München (DE)
(74) Vertreter: Lorenz & Kopf PartG mbB Patentanwälte, LKGLOBAL
(86) Internationale Anmeldenummer: PCT/DE2013/000620
(87) Internationale Veröffentlichungsnummer: WO 2014/067506

(56) Entgegenhaltungen:
- DE-A1-102006 056 355
- DE-A1-102010 021 022
- DE-A1-102010 046 850
- US-A1- 2004 031 880
- US-A1- 2012 329 593
- HARMATS M ET AL: "HYBRID-PROPULSION HIGH-ALTITUDE LONG-ENDURANCE REMOTELY PILOTED VEHICLE", JOURNAL OF AIRCRAFT, AIAA, RESTON, VA, US, Bd. 36, Nr. 2, 1. März 1999 (1999-03-01), Seiten 321-331, XP000804442, ISSN: 0021-8669

## Beschreibung

Die Erfindung betrifft ein unbemanntes Luftfahrzeug sowie ein Betriebsverfahren hierfür.

Ein unbemanntes Luftfahrzeug, auch Drohne oder UAV genannt, ist ein Fluggerät der unbemannten Luftfahrt, das z.B. zur Überwachung, Erkundung, Aufklärung, als Zieldarstellungsdrohne, zu Messzwecken oder auch mit Waffen bestückt insbesondere in Kampfgebieten verwendbar ist. Drohnen können z.B. militärisch, geheimdienstlich oder zivil eingesetzt werden. Eine Drohne fliegt unbemannt entweder automatisiert über ein Computerprogramm oder vom Boden über Funksignale bzw. über Satellitenfunk gesteuert. Je nach Einsatz und Ausstattung können Drohnen Nutzlasten tragen, wie z.B. Raketen für einen militärischen Angriff.

Im üblichen Sprachgebrauch ist für derartige Luftfahrzeuge die Abkürzung UAV für "Unmanned Aerial Vehicle" gebräuchlich. Zusätzlich hat sich die Abkürzung UAS für "Unmanned Aircraft System" eingebürgert. Die Bezeichnung umfasst das Gesamtsystem aus der fliegenden Drohne, der Bodenstation zum Start und gegebenenfalls Landung sowie der Station zur Führung und Überwachung des Fluges.

Eine umfassende Darstellung von UAS und von unterschiedlichen UAVs findet sich in Reg Austin: "Unmanned Aircraft Systems - UAVS design, development and deployment", Wiley Verlag, 2010. Die hiesige Offenbarung baut auf den Kenntnissen in dieser Druckschrift auf; diese Druckschrift wird hiermit durch Bezugnahme inkorporiert.

Aus der DE 10 2010 021 022 A1 ist ein UAV in Form eines Kippflügel-Flugzeugs bekannt.

UAVs mit Hybridsystem sind aus der US 8 128 019 B2 sowie der EP 2 196 392 A2 bekannt. Diese beiden Druckschriften betreffen Mini-UAVs, die von Fußtruppen im Feld mitgeführt werden können und mit sehr kleinen Leistungen in geringer Höhe fliegen können. Hierbei wird ein Verbrennungsmotor mit konstanter Drehzahl betrieben; ein zusätzlicher Elektromotor wird variabel betrieben, um bei einfachem und leichtgewichtigem Aufbau eine Leistungsregelung durchzuführen.

DE 10 2006056355 A1 offenbart die Merkmale der Präambel des Anspruchs 1.

Größere UAVs mit einem Höchstabfluggewicht ab ca. 70 kg bis ca. 1000 kg werden derzeit allein mit Hubkolbenmotoren betrieben, wobei in der Regel Otto-Motoren zum Einsatz kommen. Noch größere UAVs haben in der Regel Gasturbinentriebwerke, um die entsprechenden Leistungen erzeugen zu können.

Die Erfindung wendet sich insbesondere solchen größeren UAVs mit Höchstabfluggewichten ab ca. 70 kg zu und hat zum Ziel, ein unbemanntes Fluggerät mit kostengünstigem, aber sehr vielfältig für unterschiedliche Flugfunktionen einsetzbarem Antrieb zu schaffen.

Diese Aufgabe wird durch ein unbemanntes Luftfahrzeug mit den Merkmalen des Anspruches 1 gelöst.

Vorteilhafte Ausgestaltungen der Erfindung sind Gegenstand der Unteransprüche. Ein vorteilhaftes Betriebsverfahren ist in Anspruch 13 angegeben.

Die Erfindung schafft ein unbemanntes Luftfahrzeug, dessen Antrieb einen als Diesel- und/oder Kerosinmotor ausgebildeten Verbrennungsmotor mit Ladereinrichtung zur Motoraufladung, wobei der Antrieb ein Hybridantrieb ist, der zusätzlich zu dem Verbrennungsmotor einen Elektromotor und eine Energiespeichereineinrichtung zum Speichern elektrischer Energie zum Antreiben des Elektromotors umfasst.

Es ist bevorzugt, dass der Hybridantrieb eine schaltbare Kupplungseinrichtung aufweist, mit der der Verbrennungsmotor und/oder der Elektromotor wahlweise mit einem Schuberzeuger verbunden werden können.

Es ist bevorzugt, dass der Verbrennungsmotor und der Elektromotor wahlweise parallel oder in Serie betreibbar sind.

Es ist bevorzugt, dass die Ladeeinrichtung zur mehrstufigen Aufladung ausgebildet ist und/oder wenigstens einen ersten Lader und einen zweiten Lader, insbesondere für eine mehrstufige Aufladung, umfasst.

Es ist bevorzugt, dass die Ladeeinrichtung wenigstens einen durch Abgasenergie antreibbaren Lader umfasst.

Es ist bevorzugt, dass die Ladeeinrichtung wenigstens einen mechanischen Lader umfasst.

Es ist bevorzugt, dass der wenigstens eine mechanische Lader durch eine Abtriebswelle des Verbrennungsmotors und/oder durch einen Elektromotor antreibbar ist.

Es ist bevorzugt, dass der mechanische Lader durch den Elektromotor des Hybridantriebs antreibbar ist. Gemäß Anspruch 1 ist zudem eine Steuerung vorgesehen, mit der die Ladereinrichtung und/oder der Hybridantrieb abhängig von unterschiedlichen Parametern im Flugbetrieb steuerbar sind,wobei die Steuerung dazu ausgebildet ist, die Ladereinrichtung und/oder den Hybridantrieb abhängig von wenigstens einem der Parameter zulässige Wärmeabgabe, zulässiger Betriebsgeräuschpegel und/oder Temperatur zu steuern um die thermische und/oder akustische Signatur des Luftfahrzeugs zu reduzieren.

Es ist bevorzugt, dass die Steuerung dazu ausgebildet ist, die Ladereinrichtung und/oder den Hybridantrieb, insbesondere die Zu- und Abschaltung einer ersten und/oder einer zweiten Stufe der Motoraufladung oder die Zu- und Abschaltung des Elektromotors, abhängig von wenigstens einem der Parameter Höhe, Winkel eines Start- oder Landeflugs zur Vertikalen und/oder eine gewünschte Geschwindigkeit steuern.

Es ist bevorzugt, dass der Verbrennungsmotor ein Kreiskolbenmotor ist.

Es ist bevorzugt, dass das Luftfahrzeug ein Höchstabfluggewicht von mehr als 70 kg und insbesondere von mehr als 250 kg hat.

Gemäß eines weiteren Aspekts schafft die Erfindung ein Verfahren zum Betrieb eines derartigen unbemannten Luftfahrzeugs gekennzeichnet durch:
Steuern einer Aufladung eines Verbrennungsmotors eines Antriebs des und/oder eines Zusammenwirkens von Verbrennungsmotor und Elektromotor eines Hybridantriebs abhängig von wenigstens einem der Parameter Höhe, Winkel eines Start-oder Landeflugs zur Vertikalen, gewünschte Geschwindigkeit, zulässige Wärmeabgabe, zulässiger Betriebsgeräuschpegel und/oder Temperatur.

Es ist bevorzugt, dass bei Über- oder Unterschreiten vorbestimmter Grenzwerte für den wenigstens einen Parameter:
- eine erste Aufladungsstufe;
- eine zweite Aufladungsstufe,
- ein mechanischer Lader,
- ein elektrischer Lader,
- ein erster Abgaslader,
- ein zweiter Abgaslader oder
- ein Elektromotor zusätzlich zum laufenden Verbrennungsmotor und/oder
- der Verbrennungsmotor zusätzlich zum laufenden Elektromotor zugeschaltet oder abgeschaltet wird.

UAVs werden für die verschiedendsten Anwendungen in unterschiedlichen Konfigurationen militärisch und zivil eingesetzt. Hinsichtlich Energieeffizienz wären rein elektrische Antriebe vorteilhaft. Rein elektrische Antriebe wären auch insbesondere bei militärischen Einsätzen vorteilhaft im Hinblick auf thermische oder akustische Signatur. Mit anderen Worten liegt ein Vorteil eines elektrischen Antriebes für UAVs bei militärischer Nutzung darin, dass ein besonders leiser Flugbetrieb und/oder ein Flugbetrieb mit geringen thermischen Emissionen möglich ist, so dass die Gefahr eines Entdeckens des UAVs verringert ist.

Nun sind rein elektrische Antriebe aber nur für geringe Leistungen und geringe Flugzeiten geeignet. Beispielsweise wäre ein rein elektrischer Antrieb darstellbar für taktische UAVs bis ca. 70 kg Höchststartgewicht bei Flugzeiten zwischen 20 Minuten und maximal 3 Stunden. Typische Antriebsleistungen würden dann zwischen 2 und 20 kW betragen. Allerdings liegt ein Problem dabei in der Speicherdichte derzeitiger Batterien.

Um die Vorteile eines elektrischen Antriebes auch für größere UAVs und auch für höhere Flughöhen und weitere Strecken - insbesondere für UAVs der MALE-Klasse (Medium Altitude Long Endurance) oder auch der HALE-Klasse (High Altitude Long Endurance) verwenden zu können, sieht die Erfindung den Einsatz von Verbrennungsmotoren, die Diesel- oder Kerosin-getrieben sind und eine Aufladung haben, vor.

Besonders bevorzugt sind diese Verbrennungsmotoren Teil eines Hybridantriebes, insbesondere ist ein Diesel-elektrischer Hybridantrieb vorgesehen.

Diesel- und Kerosinmotoren lassen sich universell einsetzen, z.B. auch als Antriebe von schiffgestützten UAVs. Die entsprechenden Motoren haben einen geringeren Kraftstoffbedarf als Otto-Motoren oder Gasturbinen und ein besseres Teillastverhalten.

Zur energetischen und systemtechnischen Optimierung ist gemäß der Erfindung eine Aufladung durch eine Ladereinrichtung vorgesehen.

Werden hierbei für Lader die Abgasenergie der Verbrennungsmotoren benutzt, wie z.B. die Abgasenergie von Dieselmotoren, so lässt sich damit die thermische Signatur wesentlich reduzieren.

Vorzugsweise wird ein derartiger aufgeladener Diesel- oder Kerosinverbrennungsmotor mit elektrischen Komponenten in einem Antriebsstrang für UAVs kombiniert. Dies bietet insbesondere die folgenden Vorteile:
- Es ist z.B. ein rein elektrischer Betrieb im Emissionsgebiet möglich. Der Anflug kann unter Einsatz des Verbrennungsmotors erfolgen, wobei im Emissionsgebiet ein reiner oder weitgehend elektrischer Betrieb erfolgt, um die thermische und akustische Signatur zu reduzieren und so die Sicherheit des Flugzeuges zu erhöhen.
- Es ist ein Boost-Betrieb durch Aufschaltung eines Elektromotors in den mechanischen Triebstrang möglich. Ein solcher Boost-Betrieb kann z.B. für die Start- und/oder Landephase bei kritischen Umweltbedingungen oder zur Flucht oder zu sonstigen Situationen verwendet werden, wo ungewöhnlich hohe Leistungen benötigt werden.
- Ein derartiger Antrieb lässt sich für alle in Frage kommenden Konfigurationen des UAVs einsetzen. Das UAV kann beispielsweise eine Hubschrauberkonfiguration, eine A/C-Konfiguration, eine Tilt-Wing-Konfiguration und/oder Tilt-Rotor-Konfiguration haben.

Insbesondere können gemäß einer Ausführungsform der Erfindung UAVs mit Propellerantrieb und/oder Impellerantrieb oder mit Rotoren der Leistungsklasse 30 kW bis 400 kW pro einzelnem Verbrennungsmotor angetrieben werden. Bei erforderlicher höherer Leistung können z.B. mehrere Verbrennungsmotoren eingesetzt werden. Besonders vorteilhaft kommen Diesel-/Kerosin-Kreiskolbenmotoren in Betracht.

Ein solcher Kreiskolbenmotor baut sehr kompakt und - auch bei Einsatz mit Diesel oder Kerosin - relativ leichtgewichtig. Zusätzlich lässt er sich leicht in mehreren Leistungsstufen erstellen. Für eine untere Leistungsstufe ist beispielsweise ein Einscheiben-Kreiskolbenmotor vorsehbar; bei einer größeren Leistungsstufe kommt eine weitere Scheibe zum Einsatz usw.

Eine besonders bevorzugte Ausgestaltung betrifft die Kombination eines derartigen Verbrennungsmotors mit einem Elektromotor und einem elektrischen Energiespeicher zu einem Hybridantrieb, der vorzugsweise als Parallelhybrid unter Vorsehen verschiedener Aufladungskonzepte für den Verbrennungsmotor vorgesehen ist.

Vorzugsweise ist ein UAV mit "heavy fuel"-Brennstoffbetrieb und mit Aufladung vorgesehen. Unter "heavy fuel" wird insbesondere in den USA ein Diesel-und/oder Kerosin-Antrieb verstanden.

Dieselmotoren mit Aufladung sind selbstverständlich zwar in der Automobiltecnikbekannt. Als Beispiel für einen bekannten Dieselmotor mit Aufladung wäre z.B. der 3-Zylinder-Turbodiesel-Motor des "Smart"-PKWs zu nennen, der auch als Einzelmotor auf dem Markt erhältlich ist. Bei der Erfindung wird ein Dieselmotor mit Aufladung oder ein Kerosinmotor mit Aufladung für ein unbemanntes Luftfahrzeug eingesetzt. Dies ist insbesondere bei schiffsgebundener Anwendung der UAV interessant.

Besonders vorteilhaft ist die Aufladung des Verbrennungsmotors. Beispielsweise wird eine Aufladung unter Nutzung der Abgasenergie vorgesehen. Hier kommen insbesondere mit Abgasturbinen gekoppelte Lader - "Turbolader" - zum Einsatz. Insbesondere wird die Abgasenergie zweistufig durch hintereinander geschaltete Abgasturbinen ausgenutzt. Durch Nutzung der Abgasenergie erreicht man eine Verringerung der Abgastemperatur. Dadurch wird die Signatur für eine IR-Erfassung der UAVs verringert.

Weitere Vorteile von mit Diesel oder Kerosin zu betreibenden Motoren sind die gegenüber Otto-Motoren oder Gasturbinen bessere Effizienz sowohl ein besseres Teillastverhalten; außerdem sind derartige Motoren langlebiger. Dieselmotoren geben ihre Nennleistung bei niedrigerer Drehzahl ab.

Besonders bevorzugt ist wenigstens ein erster Lader und ein zweiter Lader vorgesehen, um wenigstens eine zweistufige Aufladung zu ermöglichen.

Für geringere Höhen und geringere Leistung kann der Verbrennungsmotor ohne Aufladung arbeiten. Für etwas höhere Leistungen wird eine erste Stufe der Aufladung zugeschaltet. Für noch höhere Leistungen lässt sich dann die zweite Stufe hinzuschalten. Insbesondere ist eine zweistufige Aufladung mit weiterer Nutzung der Abgasenergie interessant. Eine derartige zweistufige Aufladung ist für höhere Höhen über ca. 4000 m interessant und lässt sich auch für Höhen von ca. 10 000 m bis 12 000 m einsetzen.

Ein weiteres interessantes Konzept ist die mechanische Aufladung. Es ist somit bevorzugt, dass der Verbrennungsmotor als Lader wenigstens einen mechanischen Lader aufweist. Vorteil der mechanischen Aufladung ist, dass der Motor nicht gegen einen Abgasdruck arbeiten muss. Vorzugsweise ist die mechanische Aufladung abkoppelbar. Der Antrieb des mechanischen Laders kann z.B. über eine Antriebswelle des Verbrennungsmotors und/oder über einen elektrischen Antrieb erfolgen. Besonders bevorzugt wird als elektrischer Antrieb der Elektromotor des Hybridantriebes verwendet.

Somit ist eine mehrstufige Aufladung mit und ohne Nutzung der Abgasenergie unter Nutzung von mechanischer Energie aus dem Verbrennungsmotor oder aus dem Elektroantrieb denkbar.

Besonders bevorzugt ist eine Steuerung vorgesehen, die die unterschiedlichen Arten von Antrieben - Elektromotor und/oder Verbrennungsmotor - und/oder die unterschiedlichen Aufladesysteme je nach unterschiedlichen Parametern im Flugbetrieb des UAVs steuert.

Mögliche Parameter hierzu sind die unterschiedlichen Höhen. Diese können beispielsweise über einen Druckgeber erfasst werden. Bei einer derartigen Ausgestaltung der Erfindung weist das UAV einen Druckgeber auf, dessen Signale zur Steuerung des Antriebes verwendet werden. Weitere mögliche Parameter sind z.B. Höhe und/oder Schnellflug. Ein weiterer Parameter kann die Leistung für den Start- und/oder Landebetrieb sein. Mit einem derartigen Antriebskonzept können sowohl UAVs der MALE-Klasse als auch UAVs der HALE-Klasse mit großer Funktionsvielfalt und einem großen Bereich von Einsatzmöglichkeiten betrieben werden.

Gemäß eines weiteren Aspekts schafft die Erfindung ein UAV mit einem Hybridantrieb, wobei das UAV nach der Landung als mobile Stromversorgungseinheit betrieben wird. Das UAV fliegt bevorzugt zum gewünschten Einsatzort und ist dort schnell verfügbar im Gegensatz zu bodengebundenen Notstromaggregaten. Durch die erhöhte Einsatzflexibilität kann das UAV insbesondere zu Einsatzorten fliegen, die auf dem Landweg nicht oder nur schwer erreichbar sind und dort die Stromversorgung gewährleisten. Als primäre Energieversorgung dient der Verbrennungsmotor, der den Generator zur Bereitstellung der gewünschten Leistung antreibt. In einer anderen Ausführungsform kann der elektrische Energiespeicher entfallen, so dass Gewicht eingespart werden kann. Das UAV ist wie oben und im Folgenden beschrieben.

Ausführungsbeispiele der Erfindung werden nachfolgend anhand der beigefügten Zeichnungen näher erläutert. Darin zeigt:
- Fig. 1: eine schematische Darstellung einer ersten Ausführungsform eines unbemannten Luftfahrzeuges mit Antrieb;
- Fig. 2: eine schematische Darstellung einer zweiten Ausführungsform eines unbemannten Luftfahrzeugs mit Antrieb;
- Fig. 3: eine schematische Darstellung einer dritten Ausführungsform eines Luftfahrzeugs mit Antrieb;
- Fig. 4: eine schematische Darstellung einer ersten Ausführungsform eines Antriebes für die unbemannten Luftfahrzeuge gemäß den Fig. 1 bis 3;
- Fig. 5: eine schematische Darstellung der ersten Ausführungsform des Antriebes in einem ersten Betriebsmodus;
- Fig. 6: eine schematische Darstellung der ersten Ausführungsform des Antriebes gemäß Fig. 4 in einem zweiten Betriebsmodus;
- Fig. 7: eine schematische Darstellung der ersten Ausführungsform des Antriebes gemäß Fig. 4 in einem dritten Betriebsmodus;
- Fig. 8: eine schematische Darstellung einer zweiten Ausführungsform des Antriebes für eines der unbemannten Luftfahrzeuge gemäß den Fig. 1 bis 3;
- Fig. 9: eine schematische Darstellung der zweiten Ausführungsform des Antriebes gemäß Fig. 8 in einem ersten Betriebsmodus;
- Fig. 10: eine schematische Darstellung der zweiten Ausführungsform des Antriebes gemäß Fig. 8 in einem zweiten Betriebsmodus;
- Fig. 11: eine schematische Darstellung der zweiten Ausführungsform des Antriebes gemäß Fig. 8 in einem dritten Betriebsmodus;
- Fig. 12: eine schematische Darstellung einer dritten Ausführungsform eines Antriebes für eines der unbemannten Luftfahrzeuge gemäß den Fig. 1 bis 3;
- Fig. 13: eine schematische Darstellung der dritten Ausführungsform des Antriebes von Fig. 12 in einem ersten Betriebsmodus;
- Fig. 14: eine schematische Darstellung der dritten Ausführungsform des Antriebes von Fig. 12 in einem zweiten Betriebsmodus;
- Fig. 15: eine schematische Darstellung der dritten Ausführungsform des Antriebes von Fig. 12 in einem dritten Betriebsmodus;
- Fig. 16: eine schematische Darstellung der dritten Ausführungsform des Antriebes von Fig. 12 in einem vierten Betriebsmodus;
- Fig. 17: eine schematische Darstellung der dritten Ausführungsform des Antriebes von Fig. 12 in einem fünften Betriebsmodus und
- Fig. 18: ein schematisches Diagramm zur Darstellung einer Steuerung des Antriebes des unbemannten Luftfahrzeuges aufgrund unterschiedlicher Parameter im Flugbetrieb.

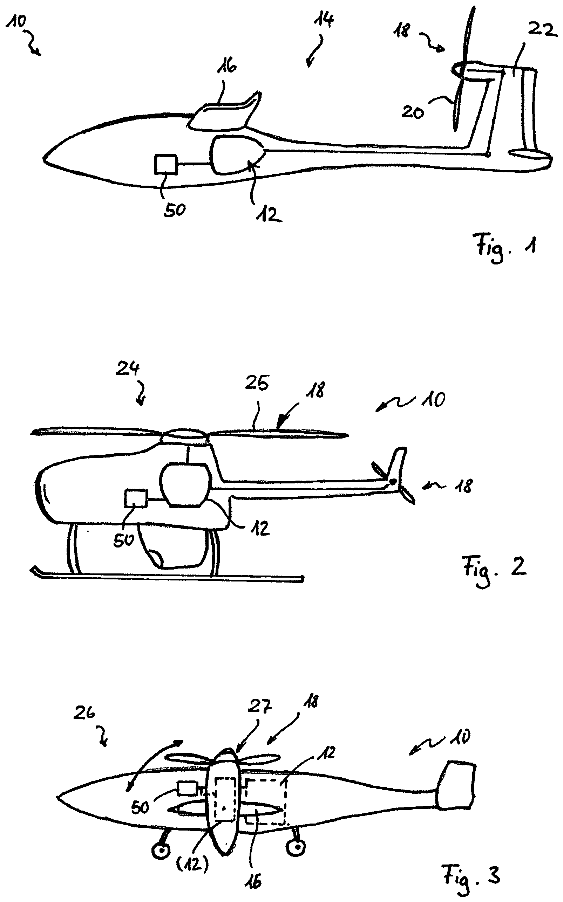

In den Fig. 1 bis 3 sind drei unterschiedliche Ausführungsformen von unbemannten Luftfahrzeugen 10 schematisch mit einer Andeutung eines jeweiligen Antriebes 12 dargestellt. Unbemannte Luftfahrzeuge 10 werden auch Drohnen oder auch in der Fachsprache UAV genannt. Sie sind Teil eines Systems zur unbemannten Luftfahrt- UAS genannt -, mit dem militärische und zivile Operationen, wie insbesondere Aufklärungsflüge, Überwachungsfunktionen oder Messfunktionen, durchgeführt werden können. Das UAS hat neben den gezeigten unbemannten Luftfahrzeugen 12 noch weiter nicht dargestellte, aber hinlänglich bekannte Systemkomponenten, wie beispielsweise der bodengestützte Steuerungsstand, mit dem das UAV fernbedient bedienbar ist, und entsprechende Kommunikationseinrichtungen zur Kommunikation zwischen dem unbemannten Luftfahrzeug 10 und dem Steuerstand. Es wird für weitere Einzelheiten zu UAS auf die eingangs erwähnte Druckschrift Reg Austin, "Unmanned Aircraft Systems - UAS design, development and deployment", Wiley Verlag 2010, verwiesen.

In Fig. 1 ist ein erstes UAV 14 dargestellt, das in Form eines motorbetriebenen Segelflugzeugs mit feststehenden Tragflächen 16, üblichem Leitwerk 18 und einem Schuberzeuger 18, hier in Form eines Propellers 20 z.B. an der Seitenflosse 22, vorgesehen ist. Die Konstruktion dieses ersten UAVs 14 beruht auf der Konstruktion des mit elektrischem Hilfsantrieb versehenen Segelflugzeugs "e-Genius", welches vom Institut für Flugzeugbau der Universität Stuttgart entwickelt wurde und am 25. Mai 2011 seinen Erstflug absolvierte.

Anders als der bekannte e-Genius-Reisemotorsegler mit Elektroantrieb ist bei dem ersten UAV 14 jedoch nicht mit einer Passagierkanzel ausgestattet; vielmehr ist der für den Piloten und einen Passagier entwickelte Raum zur Unteranbringung von UAS-Komponenten und deren Nutzfracht zur Durchführung der gewünschten UAV-Mission versehen.

Bei dem in Fig. 2 dargestellten zweiten UAV 24 handelt es sich um ein UAV in Helikopterausführung, das ebenfalls mit dem Antrieb 12 antreibbar ist. Als Schuberzeuger 18 ist hier ein Rotor 25 oder ein Rotor 25 und ein Heckrotor vorgesehen.

Bei dem in Fig. 3 dargestellten dritten UAV 26 ist als weiteres Beispiel für ein unbemanntes Luftfahrzeug 10 am Beispiel eines Kippflügelflugzeugs (Tilt Wing- und Tilt-Rotor-Konfiguration). Auch bei diesem dritten UAV 26 ist der Antrieb 12 eingesetzt, um die Schuberzeuger 18 in Form von Kipprotoren 27 anzutreiben.

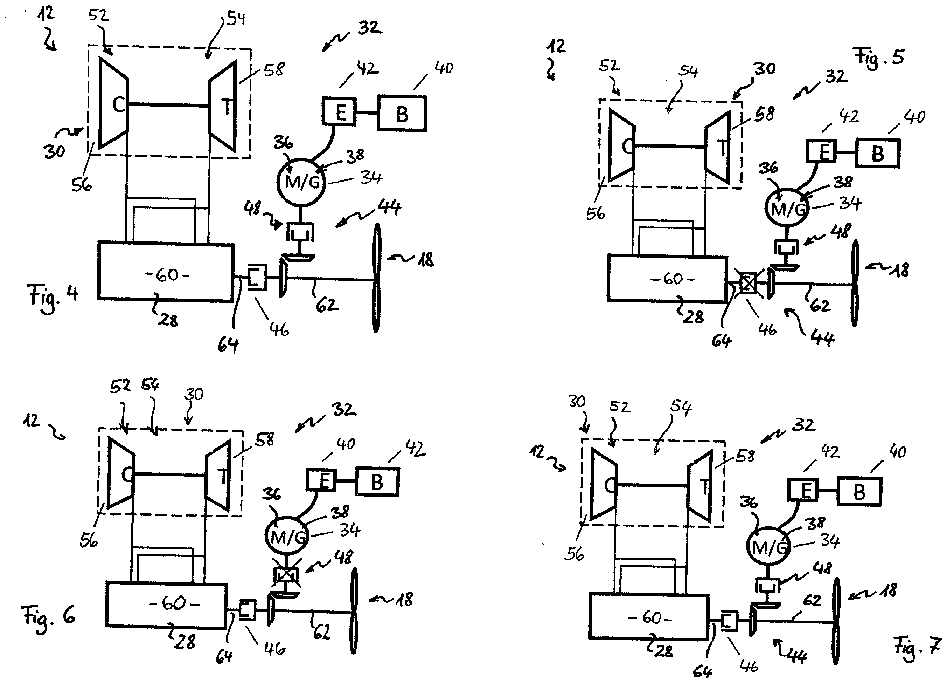

Unterschiedliche Ausführungsbeispiele für den Antrieb 12 werden im Folgenden anhand der Fig. 4 bis 17 näher erläutert.

Bei allen drei hier dargestellten unterschiedlichen Ausführungsformen des Antriebes 12 ist dieser mit einem für Diesel- und/oder Kerosin-Betrieb ausgebildeten Verbrennungsmotor 28 und mit einer Ladereinrichtung 30 zur Aufladung des Verbrennungsmotors 28 versehen.

Der Antrieb 12 ist weiter in allen drei hier dargestellten Ausführungsbeispielen ein Hybridantrieb 32. Der Hybridantrieb 32 weist neben dem Verbrennungsmotor 28 eine elektrische Maschine 34 auf. Die elektrische Maschine 34 lässt sich in einer Betriebsart als Elektromotor 36 nutzen, was in den Zeichnungen durch den Buchstaben M angedeutet ist, und in einer weiteren Betriebsart als elektrischer Generator 38 nutzen, was in den Zeichnungen durch den Buchstaben G angeordnet ist. In weiteren, hier nicht näher dargestellten Ausführungsformen kann die elektrische Maschine 34 entweder ein Elektromotor oder ein Generator sein. In weiteren, später noch näher erläuterten Ausführungsformen sind ein getrennter Elektromotor 36, M und ein getrennter Generator 38, G vorgesehen.

Der Hybridantrieb 32 weist weiter einen elektrischen Energiespeicher 40 auf, der beispielsweise als Anordnung von aufladbaren Batteriezellen oder als Akkumulatoranordnung ausgebildet ist und in den Zeichnungen auch mit "B" gekennzeichnet ist. Die elektrische Maschine 34 ist über eine Leistungselektronik 42, E an den elektrischen Energiespeicher 40, B angeschlossen.

Der Hybridantrieb 32 ist in den dargestellten Ausführungsformen als Parallelhybrid ausgebildet, wobei wahlweise der Verbrennungsmotor 28 oder der Elektromotor 36 zum Antreiben des unbemannten Luftfahrzeugs 10 nutzbar sind, oder sowohl der Verbrennungsmotor 28 als auch der Elektromotor zum gemeinsamen Antreiben nutzbar sind. Hierzu ist eine schaltbare Kupplungseinrichtung 44 vorgsehen, mit der wahlweise der Verbrennungsmotor 28 und die elektrische Maschine 34 an eine mit dem Schuberzeuger 18 verbundene Abtriebswelle 62 ankoppelbar sind.

Die schaltbare Kupplungseinrichtung 44 weist eine erste Kupplung 46 zum Ankuppeln des Verbrennungsmotors 28 und eine zweite Kupplung 48 zum Ankuppeln der elektrischen Maschine 34 auf. Die Kupplungseinrichtung 44 und die Ladereinrichtung 30 sind - siehe die Fig. 1 bis 3 - abhängig von unterschiedlichen Parametern im Flugbetrieb steuerbar, wie dies hiernach noch näher erläutert wird. "Kupplung" bezeichnet hier einen Oberbegriff für Einrichtungen, mit denen sich Drehmomente wahlweise übertragen lassen (Kupplung ist eingerückt) oder abgeschaltet werden (Kupplung ist ausgerückt).

Wie man weiter den Fig. 4 bis 17 entnehmen kann, weist die Ladereinrichtung 30 wenigstens einen ersten Lader 52 zur Aufladung des Verbrennungsmotors 28 auf.

Der erste Lader 52 kann als Abgasturbolader 54 zur Ausnutzung der Abgasenergie zwecks Aufladung ausgebildet sein.

Insbesondere weist die Ladereinrichtung 30 einen Kompressor 56 zur Druckerzeugung auf, um Verbrennungsluft mit erhöhtem Druck zu dem Verbrennungsmotor 28 zu liefern.

Der Kompressor 56 ist mit einer ersten Abgasturbine 58 koppelbar, um so den Abgasturbolader 54 als ersten Lader 52 zu bilden.

Der Verbrennungsmotor 28 weist in bevorzugter Ausgestaltung einen Kreiskolbenmotor 60 auf. Der Kreiskolbenmotor 60 ist insbesondere derart ausgebildet, wie er in der deutschen Patentanmeldung DE 10 2012 101 032.3 beschrieben und gezeigt ist, und ist demgemäß für den Betrieb mit Diesel oder Kerosin ausgelegt. Je nach erwünschter Leistungsstufe für das UAV 14, 24, 26 ist der Kreiskolbenmotor 60 als Einscheiben-Kreiskolbenmotor, als Zweischeiben-Kreiskolbenmotor oder als Dreischeiben-Kreiskolbenmotor oder als Mehrscheinben-Kreiskolbenmotor ausgebildet. Die Konfiguration als Kreiskolbenmotor 60 weist hierzu eine besondere Fähigkeit zur Modulariät auf, so dass durch geringen Aufwand eine oder mehrere Scheiben vorgesehen werden können.

Während zuvor die gemeinsamen Elemente der hier dargestellten Ausführungsformen des Antriebes 12 erläutert worden sind, wird im Folgenden auf die Unterschiede der hier dargestellten Ausführungsformen näher eingegangen.

Fig. 4 bis 7 zeigen ein erstes Ausführungsbeispiel für den Antrieb 12 mit einer einstufigen Aufladung, wobei lediglich der erste Lader 52 in Form des Abgasturboladers 54 mit dem Kompressor 56, C und der an den Kompressor 56 angeschlossenen ersten Abgasturbine 58, T dargestellt ist. Der Verbrennungsmotor 28 und die elektrische Maschine 34 sind wahlweise über die erste Kupplung 46 und die zweite Kupplung 48 an die Abtriebswelle 62 und damit den Schuberzeuger 18 anschließbar.

Der Antrieb 12 weist somit den Verbrennungsmotor 28 auf, der als Dieselmotor und als Wankelmotor ausgebildet sein kann und mit einem Aufladesystem in Form der Ladereinrichtung 30 mit dem Kompressor 56 und der ersten Abgasturbine 58 versehen ist. Die Motorabtriebswelle 64 ist über die erste Kupplung 46 mit dem Schuberzeuger 18 verbindbar. Der Generator 38 und der Elektromotor 36 oder - wie hier dargestellt - die als Generator G oder als Elektromotor M betreibbare elektrische Maschine 34 sind über eine elektronische Regelungseinheit - Leistungselektronik 42, E - mit einer Pufferbatterie - elektrischer Energiespeicher 40, B - verbunden, welche abwechselnd im Generatorbetrieb geladen oder zur Versorgung der elektrischen Maschine 34 im Elektromotorbetrieb mit elektrischer Energie zu verwenden ist.

Fig. 5 zeigt einen ersten Betriebsmodus, bei dem der Hybridantrieb 32 im reinen Elektrobetrieb betrieben wird. Hierzu ist die erste Kupplung 46 ausgerückt und die zweite Kupplung 48 eingerückt.

Fig. 6 zeigt den "konventionellen" Betrieb, bei dem die Antriebsleitung des Hybridantriebes 32 allein durch den Verbrennungsmotor 28 bereitgestellt wird. Hierzu ist die erste Kupplung 46 eingerückt und die zweite Kupplung 48 ausgerückt.

Bei dem in Fig. 7 gezeigten dritten Betriebsmodus sind sowohl die erste Kupplung 46 als auch die zweite Kupplung 48 eingerückt und somit sind sowohl der Verbrennungsmotor 28 als auch die elektrische Maschine 34 mit der Abtriebswelle 62 und somit auch untereinander verbunden. In diesem dritten Modus kann beim Betreiben der elektrischen Maschine 34 als Elektromotor M eine elektrische Booster-Funktion - also ein Erhöhen der Systemleistung durch zusätzliche elektrische Energie - oder bei Generatorfunktion G der elektrischen Maschine 34 eine Ladebetrieb durchgeführt werden.

Somit sind durch den dargestellten Aufbau der ersten Ausführungsform des Hybridantriebes 32, wie er in den Fig. 4 bis 7 dargestellt ist, zumindest vier folgende Betriebszustände möglich:
a) Konventioneller Betrieb: Der Verbrennungsmotor 28 treibt den Schuberzeuger 18 an, während Generator G und Elektromotor M abgekoppelt sind. Dies entspricht dem Betriebsmodus bisheriger UAV-Antriebssysteme auf Basis von Verbrennungsmotoren.
b) "Elektrischer Boost": Zusätzlich zum Verbrennungsmotor 28 wird der Elektromotor M an die Abtriebswelle 62 angekoppelt. Hierdurch kann ein zusätzliches Drehmoment auf die Abtriebswelle 62 übertragen werden, wodurch für kurze Zeit - abhängig von der Kapazität des elektrischen Energiespeichers 40 - zusätzliche Leistung zur Verfügung gestellt wird und hierdurch Spitzen im Leistungsbedarf abgefangen werden können.
c) "Lademodus": In Betriebsphasen, welche nicht die gesamte Motorleistung des Verbrennungsmotors 28 für den Schuberzeuger 18 benötigen, kann ein Teil der zur Verfügung stehenden Leistung an den Generator G abgegeben werden, um den elektrischen Energiespeicher 40 wieder aufzuladen.
d) "Rein elektrischer Betrieb": Zusätzlich zu den zuvor genannten Betriebsmoden kann auch der Verbrennungsmotor 28 abgekoppelt und abgeschaltet werden, um auf einen rein elektrischen Betrieb umzuschalten. Hier wird nun der Elektromotor E an die Abtriebswelle angekoppelt, welcher von dem elektrischen Energiespeicher B mit elektrischer Energie versorgt wird.

Dies bietet insbesondere die folgenden Vorteile:

Die Funktionalität eines Parallel-Hybrids erlaubt den rein elektrischen Betrieb zur Reduzierung der thermischen und akustischen Signatur in kritischen Missionsphasen. Gleichzeitig kann im konventionellen Betrieb die hohe Energiespeicherdichte von fossilen Brennstoffen ausgenutzt werden, um Reichweiten darzustellen, die durch einen reinen Elektroantrieb nicht zur Verfügung stehen. Ergänzend bietet das System die Möglichkeit, Batterien wieder im Flug zu laden, wobei durch eine Lastpunktanhebung des Verbrennungsmotors 28 ein effizienter Betriebszustand des Verbrennungsmotors 28 gewählt werden kann.

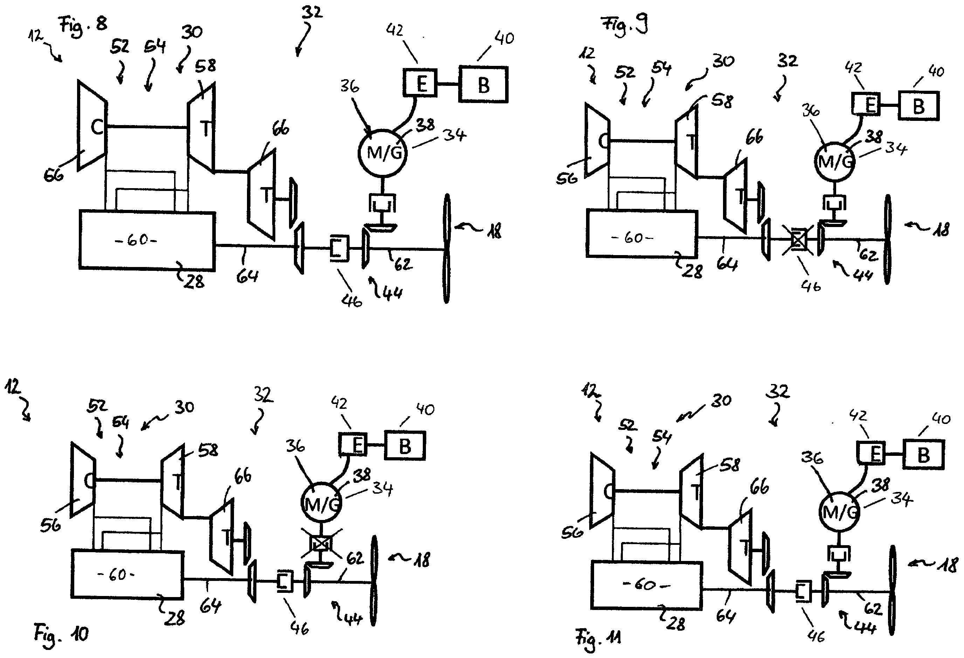

In den Fig. 8 bis 11 ist eine zweite Ausführungsform des Hybridantriebes 32 dargestellt. Diese zweite Ausführungsform entspricht im Wesentlichen der ersten Ausführungsform bis auf den Unterschied, dass die zweite Ausführungsform zusätzlich zu der ersten Abgasturbine 58, T noch eine zweite Abgasturbine 66, T aufweist, die an die Motorabtriebswelle 64 und/oder die Abtriebswelle 62 angekoppelt oder ankoppelbar ist.

Durch die zweite Abgasturbine 66 lässt sich die Abgasenergie des Verbrennungsmotors 28 in zwei Stufen ausnutzen. In der ersten Abgasturbine 58, T wird die Abgasenergie durch den Kompressor 56, C zur Aufladung des Verbrennungsmotors 28 genutzt. In der zweiten Abgasturbine 66, T wird die verbleibende Abgasenergie zum weiteren Antreiben genutzt.

Hierdurch lässt sich gegenüber der ersten Ausführungsform die Abgastemperatur senken, wodurch die thermische Signatur des unbemannten Luftfahrzeuges 10 verringert werden kann.

Ansonsten entspricht die Funktionalität der in den Fig. 8 bis 11 dargestellten zweiten Ausführungsform des Hybridantriebes 32 derjenigen der ersten Ausführungsform des Hybridantriebes 32, wie sie in den Fig. 4 bis 7 dargestellt ist. Demgemäß zeigt auch Fig. 9 den ersten Betriebsmodus für den reinen Elektrobetrieb, Fig. 10 zeigt den zweiten Betriebsmodus für den konventionellen Betrieb und Fig. 11 zeigt den dritten Betriebsmodus, in dem entweder der elektrische Boost durchgeführt werden kann oder der Ladebetrieb durchgeführt werden kann. Für die weiteren Einzelheiten dieser drei Betriebsmodi wird auf die obigen Ausführungen bezüglich der ersten Ausführungsform verwiesen.

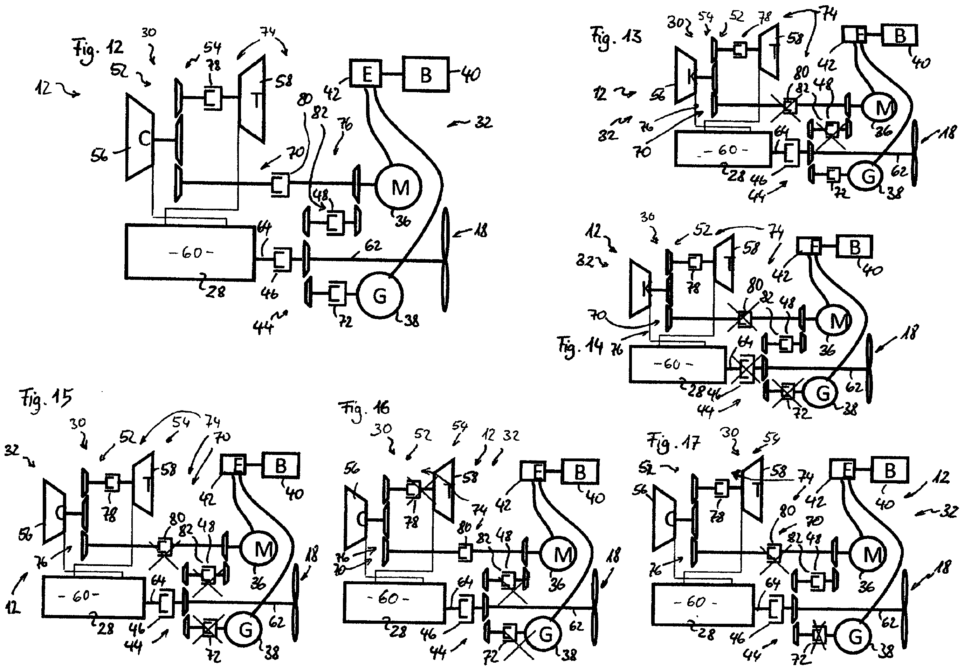

In den Fig. 12 bis 17 ist eine dritte Ausführungsform des Hybridantriebes 32 als Beispiel für den Antrieb 12 für die UAVs 14, 24, 26 dargestellt, wobei gleiche oder entsprechende Elemente wie bei den ersten beiden Ausführungsformen die gleichen Bezugszeichen tragen und für nähere Einzelheiten auf die obigen Darlegungen verwiesen werden kann.

Die Ladereinrichtung 30 ist bei dieser dritten Ausführungsform für eine schaltbare mehrstufige Aufladung ausgebildet und weist den ersten Lader 52 und einen zweiten Lader 70 zum Schaffen der mehrstufigen Aufladung auf, wobei die unterschiedlichen Lader 52, 70 über die Steuerung 50 gesteuert zuschaltbar oder abschaltbar sind, um die unterschiedlichen Stufen der Aufladung zuzuschalten oder abzuschalten.

Bei der dritten Ausführungsform des Hybridantriebes 32 ist hier anstelle der elektrischen Maschine 34, die sowohl im Elektromotorbetrieb als auch im Generatorbetrieb betrieben werden kann, wenigstens ein Elektromotor 36, M und ein Generator 38, G dargestellt. Die Kupplungseinrichtung 44 weist die erste Kupplung 46 zum Koppeln der Motorabtriebswelle 64 an die Abtriebswelle 62, die zweite Kupplung 48 zum Kuppeln des Elektromotors 36, M an die Abtriebswelle 62 und eine dritte Kupplung 72 zum Ankuppeln des Generators 72 an die Motorabtriebswelle 64 auf.

Weiter ist eine Lader-Kupplungseinrichtung 74 vorgesehen, um die Ladereinrichtung 30 zu schalten; insbesondere den ersten Lader 52 und/oder den zweiten Lader 70 anzukuppeln oder abzukuppeln.

Zum Bilden des ersten Laders 52 ist der Kompressor 56 mit der ersten Abgasturbine 58 vorgesehen.

Weiter ist als zweiter Lader 70 ein mechanischer Lader 76 vorgesehen. Der mechanische Lader 76 kann z.B. den Kompressor 56 und eine mechanische Antriebsquelle nutzen. In einer ersten Ausgestaltung oder einem ersten Aufladungsmodus wird hierzu ein elektrischer Antrieb, wie insbesondere der Elektromotor 36, M, ausgenutzt. In einer zweiten Ausführung oder einem zweiten Aufladungsmodus wird hierzu die Bewegung der Motorabtriebswelle 64 ausgenutzt.

In dem in Fig. 12 dargestellten Ausführungsbeispiel ist schematisch der Kompressor 56, C als Druckerzeuger dargestellt, der durch eine erste Laderkupplung 78 der Laderkupplungseinrichtung 74 an die erste Abgasturbine 58, T ankoppelbar ist, um so den Abgasturbolader 54 als ersten Lader 52 zu bilden, und durch eine zweite Laderkupplung 80 der Laderkupplungseinrichtung 74 an den Elektromotor 36, M ankuppelbar ist, um so den elektrisch betriebenen mechanischen Lader 76 zu bilden und gegebenenfalls durch eine dritte Laderkupplung 82 der Laderkupplungseinrichtung 74 an die Motorabtriebswelle 64 ankuppelbar ist, um so den durch die Abtriebswellenbewegung antreibbaren mechanischen Lader 76 zu bilden.

In der dargestellten Ausführung ist als dritte Laderkupplung 82 einfach die zweite Kupplung 48 der schaltbaren Kupplungseinrichtung 44 angedeutet.

In den Fig. 13 bis 17 sind fünf unterschiedliche Betriebsmodi für diese dritte Ausführungsform des Hybridantriebes 32 dargestellt. In dem Betriebsmodus der Fig. 13 ist die erste Laderkupplung 78 eingerückt, so dass die erste Aufladungsstufe wirkt. Der mit der ersten Stufe aufgeladene Verbrennungsmotor 28 ist durch die eingerückte erste Kupplung 46 mit dem Schuberzeuger 18 verbunden. Der Generator 38, G ist durch die eingerückte dritte Kupplung 72 ebenfalls mit der Motorabtriebswelle 64 verbunden. Demnach entspricht der in Fig. 13 dargestellte erste Betriebsmodus einem Ladebetrieb, wo Schub über den auf einer ersten Stufe aufgeladenen Verbrennungsmotor 28 erzeugt wird und überschüssige Leistung zum Laden des elektrischen Energiespeichers 40 genutzt wird. Die zweite Kupplung 48 und die zweite Laderkupplung 80 sind ausgerückt, so dass der Elektromotor 36 weder mit der Ladereinrichtung 30 noch mit dem Schuberzeuger 18 verbunden ist.

Fig. 14 zeigt als zweiten Betriebsmodus den elektrischen Betrieb. Hierzu ist die zweite Laderkupplung 80 ausgerückt und der Elektromotor durch Einrücken der zweiten Kupplung 48 mit der Abtriebswelle 62 und damit dem Schuberzeuger 18 verbunden. Die erste Kupplung 46 und die dritte Kupplung 72 sind ausgerückt, so dass weder der Verbrennungsmotor 28 noch der Generator mit der Abtriebswelle 62 verbunden sind. Der Verbrennungsmotor 28 kann hier abgeschaltet sein.

Der in Fig. 15 dargestellte dritte Betriebsmodus entspricht dem konventionellen Betrieb bei einstufiger Aufladung rein mit dem Abgasturbolader 54. Hierzu sind lediglich die erste Kupplung 56 und die erste Laderkupplung 78 eingerückt, alle übrigen Kupplungen sind ausgerückt.

Fig. 16 zeigt einen vierten Betriebsmodus in Form eines Betriebs rein mit Verbrennungsmotor 28, wobei dieser aber durch den zweiten Lader 70 - elektrische Aufladung - geladen wird. Hierzu sind die erste Kupplung 46 und die zweite Laderkupplung 80 eingerückt, alle anderen Kupplungen sind ausgerückt.

Fig. 17 zeigt einen fünften Betriebsmodus, in dem als weitere Funktionalität der elektrische Boost dargestellt ist. Hierzu ist der einstufig aufgeladene Verbrennungsmotor 28 - Abgasturbolader 54 aktiv - mit dem Schuberzeuger 18 verbunden und zusätzlich ist noch der Elektromotor 36 mit dem Schuberzeuger 18 verbunden. Die erste Kupplung 46 und die zweite Kupplung 48 sowie die erste Laderkupplung 78 sind eingerückt, alle anderen Kupplungen sind ausgerückt.

Selbstverständlich sind weitere Betriebsmodi durch unterschiedliche Schaltungen der unterschiedlichen Kupplungen 46, 48, 72, 78, 80, 82 möglich.

Bei der in den Fig. 12 bis 17 dargestellten dritten Ausführungsform des Hybridantriebes 32 weist der Antrieb 12 einen Verbrennungsmotor - Dieselmotor/Wankelmotor - mit Aufladesystem - Ladereinrichtung 30 - umfassend den Kompressor 56 und die Abgasturbine 58 auf. Der Kompressor 56 der Ladereinrichtung 30 kann hierbei über ein Kupplungssystem - Laderkupplungseinrichtung 74 - entweder von der Abgasturbine 58 oder einem Elektromotor - z.B. dem Elektromotor M des Hybridsystems - angetrieben werden. Die Motorabtriebswelle 64 des Verbrennungsmotors 28 ist direkt mit dem Schuberzeuger 18 (z.B. Propeller 20 oder Rotor 25, 27) verbindbar. Zusätzlich ist der elektrische Generator 38, G über eine separate Kupplung - dritte Kupplung 72 - mit der Motorabtriebswelle 64 und/oder der Abtriebswelle 62 zu verbinden. Der Generator 38, G und der Elektromotor 36, M sind über eine elektronische Regeleinheit - Leistungselektronik 42, E - mit einer Pufferbatterie - Beispiel für den elektrischen Energiespeicher 40, B - verbunden, welche abwechselnd vom Generator 38, G geladen wird oder zur Versorgung des Elektromotors 36, M zu verwenden ist.

Durch den in den Fig. 12 bis 17 dargestellten Aufbau sind insbesondere die folgenden vier Betriebszustände möglich:
a) "Konventioneller Betrieb": Der Kompressor 56 des Abgasturboladers 54 wird von der Abgasturbine 58 der Ladereinrichtung 30 angetrieben, der Elektromotor 36, M und der Generator 38, G sind dabei abgekuppelt. Dies entspricht dem Betriebsmodus bisheriger konventioneller Antriebssysteme, allerdings mit dem Unterschied des Diesel-oder Kerosinbetriebs mit zusätzlicher Aufladung.
b) "Elektrischer Turbo": Der Kompressor 56 der Ladereinrichtung 70 wird in diesem Fall von dem Elektromotor 36, M angetrieben. Hierdurch kann eine größere Leistungssteigerung erzeugt werden, als dies bei einer Kopplung des Elektromotors 36, M an die Abtriebswelle 62 der Fall wäre.
c) "Elektrischer Boost": Hier wird zusätzlich zur Leistung der Verbrennungskraftmaschine die Leistung des Elektromotors 36, M auf die Abtriebswelle 62 übertragen.
d) "Lademodus": In Betriebsphasen, wo nicht die gesamte Motorleistung des Verbrennungsmotors 28 vom Schuberzeuger 18 benötigt wird, kann ein Teil der zur Verfügung stehenden Leistung an den Generator 38, G abgegeben werden, um die Batterie - elektrischer Energiespeicher 40, B - aufzuladen. Der Kompressor 56 der Ladereinrichtung 30 wird hierbei von der Abgasturbine 58 angetrieben, während der Elektromotor 36, M abgekoppelt ist.

### Dies bietet insbesondere folgende Vorteile.

Neben der Funktionalität eines Parallelhybrids - Betrieb mit Verbrennungskraftmaschine, rein elektrischer Betrieb oder Wiederaufladung der Batterie - kann der Elektromotor 36, M auf zwei Arten eingesetzt werden, um zusätzliche Leistung zur Verfügung zu stellen:
a) durch einen elektrischen Boost, in dem die Leistung direkt auf die Abtriebswelle 62 eingespeist wird oder
b) durch einen elektrisch angetriebenen mechanischen Lader 76, bei dem die benötigte Leistung für die Aufladung vom Elektromotor 36, M zur Verfügung gestellt wird und nicht in den Prozess des Verbrennungsmotors eingegriffen werden muss. Dies hat den Vorteil, dass im Gegensatz zum Antrieb mit einer Abgasturbine 58 kein Gegendruck beim Abgas aufgebaut wird, gegen welche der Verbrennungsmotor 28 sonst arbeiten muss. Im Gegensatz zur Verwendung eines mechanischen Antriebes für den mechanischen Lader 76 - insbesondere durch Ankupplung an die Motorabtriebswelle 64 - braucht keine mechanische Leistung der Abtriebswelle entzogen werden.

Voranstehend sind anhand der Figuren verschiedene Ausführungsformen für den Hybridantrieb 32 dargestellt. Selbstverständlich sind weitere Ausführungsformen möglich, die hier aber nicht näher dargestellt sind. Zum Beispiel kann die zweite Abgasturbine 66 auch bei der in den Fig. 12 bis 17 dargestellten Ausführungsform vorhanden sein, insbesondere schaltbar über eine gesonderte Schalteinrichtung, die diese zweite Abgasturbine 66 zuschalten oder abschalten kann.

Weiter ist zusätzlich oder alternativ zu dem Antrieb des mechanischen Laders 76 durch den Elektromotor 36 des Hybridantriebes auch ein gesonderter Elektromotor für den Antrieb des Kompressors möglich. Andererseits ist es auch möglich, den Kompressor 56 über die Motorabtriebswelle 64 anzutreiben. Weiter ist anstelle der Darstellung mit nur einem Kompressor 56 auch möglich, mehrere Kompressoren vorzusehen, die über die erste Abgasturbine 58, die zweite Abgasturbine 66, den Elektromotor 36 des Hybridantriebes 32 und/oder durch die Motorabtriebswelle 64 antreibbar sind.

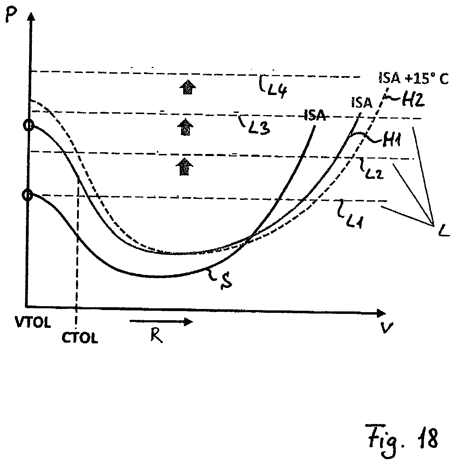

Im Folgenden wird noch anhand der Darstellung in Fig. 18 eine mögliche Steuerung des Hybridantriebes 32 für das unbemannte Luftfahrzeug 10 näher erläutert.

Wie die Fig. 2 und 3 zeigen, kann das unbemannte Luftfahrzeug 10 ein UAV 24, 26 sein, das zum vertikalen Starten und Landen (VTOL) fähig ist, und/oder ein UAV 14, 26 sein, das zu einem konventionellen Starten und Landen wie ein Flugzeug - Ausnutzung der Luftströmung bei Fahrt des Luftfahrzeugs 10 (CTOL) - fähig ist.

In dem Diagramm der Fig. 18 ist die benötigte Leistung P über die Fluggeschwindigkeit v dargestellt. Der Pfeil R zeigt den Bereich des Reiseflugs - Cruise-Bereich. "ISA" steht für die internationale Standard-Atmosphäre (Norm-Atmosphäre).

Die Kurve S zeigt die benötigte Leistung für die unterschiedlichen Flugbedingungen auf Seehöhe bei Standard-Atmosphären-Bedingungen; die Kurve H1 zeigt die benötigte Leistung bei großen Höhen und Standard-Atmosphären-Bedingungen und die Kurve H2 zeigt die benötigte Leistung bei großer Höhe und bei um ca. 15°C erhöhten Standard-Atmosphären-Bedingungen.

Durch die unterschiedlichen Betriebsmodi sind sämtliche bei diesen unterschiedlichen Betriebsbedingungen und Flugbedingungen benötigten Leistungsbereiche abgedeckt.

Die Steuerung schaltet die unterschiedlichen Betriebsmoden, wie insbesondere die Zu- oder Abschaltung der Ladereinrichtung oder die Zu- oder Abschaltung unterschiedlicher Lader oder unterschiedlicher Stufen der Aufladung, abhängig von Parametern, die diese Betriebsbedingungen anzeigen, wie IST-/SOLL-Geschwindigkeit, Höhe - insbesondere erfassbar über Drucksensoren -, gewünschte VTOL oder CTOL oder Temperatur.

Die in der Figur dargestellten, durch die Steuerung zu- oder abschaltbaren Leistungsstufen L bezeichnen die maximal erreichbare Leistung für:
- L1: Verbrennungsmotorbetrieb ohne Aufladung;
- L2: Verbrennungsmotorbetrieb mit Aufladung in erster Stufe - insbesondere Betrieb des ersten Laders 52, d.h. des Abgasturboladers 54;
- L3: Verbrennungsmotorbetrieb mit Aufladung in der zweiten Stufe - z.B. Betrieb des zweiten Laders 70, wie insbesondere des elektrisch angetriebenen, mechanischen Laders 76;
- L4: Verbrennungsmotorbetrieb mit Aufladung in der zweiten Stufe und zusätzlich mit elektrischer Boost-Funktion.

Die Motoraufladung erhöht die erhältliche Motorleistung des Verbrennungsmotors 28. Dies ermöglicht insbesondere vertikale Starts bei größerer Höhe und/oder bei höherer Umgebungstemperatur ("hot and high conditions"). Weiter wird dadurch die maximale Reisegeschwindigkeit erhöht.

Die Möglichkeit des elektrischen Boosts erhöht die erhältliche Leistung für solche Bedingungen weiter, wo die Grenze der Leistungserhöhung durch Motoraufladung erreicht ist. Dadurch können die Einsatzbereiche weiter ausgedehnt werden. Es sind z.B. vertikale Starts bei noch größeren Höhen und bei noch höheren Temperaturen möglich; auch ist eine maximale Reisegeschwindigkeit bei schwierigen Bedingungen weiter erhöhbar.

### Bezugszeichenliste:

- 10: unbemanntes Luftfahrzeug
- 12: Antrieb
- 14: erstes UAV
- 16: Tragfläche
- 18: Schuberzeuger
- 20: Propeller
- 22: Seitenflosse
- 24: zweites UAV
- 25: Rotor
- 26: drittes UAV
- 27: Kipprotor
- 28: Verbrennungsmotor
- 30: Ladereinrichtung
- 32: Hybridantrieb
- 34: elektrische Maschine
- 36, M: Elektromotor
- 38, G: Generator
- 40, B: elektrischer Energiespeicher
- 42, E: Leistungselektronik
- 44: schaltbare Kupplungseinrichtung
- 46: erste Kupplung
- 48: zweite Kupplung
- 50: Steuerung
- 52: erster Lader
- 54: Abgasturbolader
- 56: Kompressor
- 58: erste Abgasturbine
- 60: Kreiskolbenmotor
- 62: Abtriebswelle
- 64: Motorabtriebswelle
- 66: zweite Abgasturbine
- 70: zweiter Lader
- 72: dritte Kupplung
- 74: Laderkupplungseinrichtung
- 76: mechanischer Lader
- 78: erste Laderkupplung
- 80: zweite Laderkupplung
- 82: dritte Laderkupplung
- S: Meereshöhe
- R: Cruise-Bereich
- v: Vorwärtsgeschwindigkeit
- P: Leistung
- H1: große Höhe, bei ISA
- H2: große Höhe, bei ISA+15°C
- ISA: Standardatmosphäre
- VTOL: Vertikalstart/-landung
- CTOL: konventionelle(r) Start/Landung
- L1: Verbrennungsmotorbetrieb ohne Aufladung
- L2: Verbrennungsmotorbetrieb mit Aufladung 1. Stufe
- L3: Verbrennungsmotorbetrieb mit Aufladung 2. Stufe
- L4: Verbrennungsmotorbetrieb mit Aufladung 2. Stufe + Elektrischer Boost

## Patentansprüche

1. Unbemanntes Luftfahrzeug (10), dessen Antrieb (12) einen als Diesel-und/oder Kerosinmotor ausgebildeten Verbrennungsmotor (28) mit Ladereinrichtung (30) zur Motoraufladung umfasst,wobei der Antrieb (12) ein Hybridantrieb (32) ist, der zusätzlich zu dem Verbrennungsmotor (28) einen Elektromotor (36, M) und eine Energiespeichereinrichtung zum Speichern elektrischer Energie zum Antreiben des Elektromotors (36, M) umfasst,
und wobei eine Steuerung (50) vorgesehen ist, mit der die Ladereinrichtung (30) und/oder der Hybridantrieb (32) abhängig von unterschiedlichen Parametern im Flugbetrieb steuerbar sind, **dadurch gekennzeichnet, dass** die Steuerung (50) dazu ausgebildet ist, die Ladereinrichtung (30) und/oder den Hybridantrieb (32) abhängig von wenigstens einem der Parameter zulässige Wärmeabgabe, zulässiger Betriebsgeräuschpegel und/oder Temperatur zu steuern um die thermische und/oder akustische Signatur des Luftfahrzeugs (10) zu reduzieren.

2. Luftfahrzeug nach Anspruch 1,
**dadurch gekennzeichnet,**
**dass** die Steuerung (50) dazu ausgebildet ist, die Ladereinrichtung (30) und/oder den Hybridantrieb (32) zusätzlich abhängig von wenigstens einem der Parameter Höhe, Winkel eines Start- oder Landeflugs zur Vertikalen und/oder gewünschte Geschwindigkeit zu steuern.

3. Luftfahrzeug nach einem der Ansprüche 1 oder 2,
**dadurch gekennzeichnet,**
**dass** die Steuerung (50) dazu ausgebildet ist, die Zu- und Abschaltung einer ersten (L2) und/oder einer zweiten Stufe (L3) der Motoraufladung und/oder die Zu- und Abschaltung des Elektromotors (36, M) zu dem laufenden Verbrennungsmotor (28) und/oder die Zu- und Abschaltung des Verbrennungsmotors (28) zu dem laufenden Elektromotor (36, M) abhängig von dem wenigstens einen Parameter zu steuern.

4. Luftfahrzeug nach einem der voranstehenden Ansprüche,
**dadurch gekennzeichnet,**
**dass** der Hybridantrieb (32) eine schaltbare Kupplungseinrichtung (44) aufweist, mit der der Verbrennungsmotor (28) und/oder der Elektromotor (36, M) wahlweise mit einem Schuberzeuger (18) verbunden werden können.

5. Luftfahrzeug nach einem der voranstehenden Ansprüche,
**dadurch gekennzeichnet,**
**dass** der Verbrennungsmotor (28) und der Elektromotor (36, M) wahlweise parallel oder in Serie betreibbar sind.

6. Luftfahrzeug nach einem der voranstehenden Ansprüche,
**dadurch gekennzeichnet,**
**dass** die Ladeeinrichtung (30) zur mehrstufigen Aufladung ausgebildet ist und/oder wenigstens einen ersten Lader (52) und einen zweiten Lader (70), insbesondere für eine mehrstufige Aufladung, umfasst.

7. Luftfahrzeug nach einem der voranstehenden Ansprüche,
**dadurch gekennzeichnet,**
**dass** die Ladeeinrichtung (30) wenigstens einen durch Abgasenergie antreibbaren Lader umfasst.

8. Luftfahrzeug nach einem der voranstehenden Ansprüche,
**dadurch gekennzeichnet,**
**dass** die Ladeeinrichtung (30) wenigstens einen mechanischen Lader (76) umfasst.

9. Luftfahrzeug nach Anspruch 8,
**dadurch gekennzeichnet,**
**dass** der wenigstens eine mechanische Lader (76) durch eine Abtriebswelle (62) des Verbrennungsmotors (28) und/oder durch einen Elektromotor (36, M) antreibbar ist.

10. Luftfahrzeug nach Anspruch 9,
**dadurch gekennzeichnet,**
**dass** der mechanische Lader (76) durch den Elektromotor (36, M) des Hybridantriebs (32) antreibbar ist.

11. Luftfahrzeug nach einem der voranstehenden Ansprüche,
**dadurch gekennzeichnet,**
**dass** der Verbrennungsmotor (28) ein Kreiskolbenmotor (60) ist.

12. Luftfahrzeug nach einem der voranstehenden Ansprüche,
**dadurch gekennzeichnet,**
**dass** das Luftfahrzeug ein Höchstabfluggewicht von mehr als 70 kg und insbesondere von mehr als 250 kg hat.

13. Verfahren zum Betrieb eines unbemannten Luftfahrzeugs (10) nach einem der voranstehenden Ansprüche,
**gekennzeichnet durch** Steuern einer Aufladung eines Verbrennungsmotors (28) eines Antriebs (12) des und/oder eines Zusammenwirkens von Verbrennungsmotor (28) und Elektromotor (36, M) eines Hybridantriebs (32) abhängig von wenigstens einem der Parameter zulässige Wärmeabgabe, zulässiger Betriebsgeräuschpegel und/oder Temperatur.

14. Verfahren nach Anspruch 13,
**gekennzeichnet durch** Steuern der Aufladung eines Verbrennungsmotors (28) eines Antriebs (12) des und/oder des Zusammenwirkens von Verbrennungsmotor (28) und Elektromotor (36, M) eines Hybridantriebs (32) abhängig von wenigstens einem der Parameter abhängig von wenigstens einem der Parameter Höhe, Winkel eines Start-oder Landeflugs zur Vertikalen und/oder gewünschte Geschwindigkeit.

15. Verfahren nach Anspruch 13 oder 14,
**dadurch gekennzeichnet,**
**dass** bei Über- oder Unterschreiten vorbestimmter Grenzwerte für den wenigstens einen Parameter:
• eine erste Aufladungsstufe (L2);
• eine zweite Aufladungsstufe (L3),
• ein mechanischer Lader (76),
• ein elektrischer Lader,
• ein erster Abgaslader,
• ein zweiter Abgaslader oder
• ein Elektromotor (36, M) zusätzlich zum laufenden Verbrennungsmotor (28) und/oder
• der Verbrennungsmotor (28) zusätzlich zum laufenden Elektromotor (36, M) zugeschaltet oder abgeschaltet wird.

## Claims

1. An unmanned aircraft (10) having a propulsion (12) that comprises an internal combustion engine (28), configured as a diesel and/or kerosene engine, having a charger device (30) for engine charging, wherein the propulsion (12) is a hybrid propulsion (32) which, in addition to the internal combustion engine (28), comprises an electric motor (36, M) and an energy storage device for storing electric energy for driving the electric motor (36, M),
wherein a controller (50) is provided, with which the charger device (30) and/or the hybrid propulsion (32) can be controlled in dependency of various parameters in flight operation, **characterized in that**
the controller (50) is designed to control the charger device (30) and/or the hybrid propulsion (32) in dependency of at least one of the parameters of allowable heat output, allowable operating noise level, and/or temperature to reduce the thermal and/or acoustic signature of the airplane (10).

2. The aircraft according to claim 1, **characterized in that** the controller (50) is designed to control the charger device (30) and/or the hybrid propulsion (32) additionally in dependency of at least one of the parameters of altitude, angle of a takeoff and/or landing flight to the vertical, and desired velocity.

3. The aircraft according to claims 1 or 2, **characterized in that**
the controller (50) is designed to control the switching on and off of a first (L2) and/or second stage (L3) of the engine charging or the switching on and off of the electric motor (36, M) to the running internal combustion engine (28) and/or the switching on and off of the internal combustion engine (28) to the running electric motor (36, M) in dependency of at least one of the parameters.

4. The aircraft according to one of the preceding claims, **characterized in that**
the hybrid propulsion (32) comprises a switchable coupling device (44) with which the internal combustion engine (28) and/or the electric motor (36, M) can be selectively connected to a thrust generator (18).

5. The aircraft according to one of the preceding claim, **characterized in that**
the internal combustion engine (28) and the electric motor (36, M) can be selectively operated in parallel or in series.

6. The aircraft according to any of the preceding claims, **characterized in that**
the charging device (30) is designed for multi-stage charging and/or comprises at least a first charger (52) and a second charger (70), in particular for a multi-stage charging.

7. The aircraft according to any of the preceding claims, **characterized in that**
the charging device (30) comprises at least one charger that can be driven by exhaust gas energy.

8. The aircraft according to any of the preceding claims, **characterized in that**
the charging device (30) comprises at least one mechanical charger (76).

9. The aircraft according to claim 8, **characterized in that** the at least one mechanical charger (76) can be driven by an output shaft (62) of the internal combustion engine (28) and/or through an electric motor (36, M).

10. The aircraft according to claim 9, **characterized in that** the mechanical charger (76) can be driven by the electric motor (36, M) of the hybrid propulsion (32).

11. The aircraft according to any of the preceding claims, **characterized in that**
the internal combustion engine (28) is a rotary piston engine (60) .

12. The aircraft according to any of the preceding claims, **characterized in that**
the aircraft has a maximum takeoff weight of more than 70 kg, and in particular of more than 250 kg.

13. A method for operating an unmanned aircraft (10) according to any of the preceding claims, **characterized by** controlling of a charging of an internal combustion engine (28) of a propulsion (12) of the and/or a cooperation between internal combustion engine (28) and electric motor (36, M) of a hybrid propulsion (32) in dependency of at least one of the parameters of allowable heat output, allowable operating noise level, and/or temperature.

14. The method according to claim 13, **characterized by** controlling charging of an internal combustion engine (28) of a propulsion (12) of the and/or the cooperation between internal combustion engine (28) and electric motor (36, M) of a hybrid propulsion (32) in dependency of at least one of the parameters of altitude, angle of a takeoff and/or landing flight to the vertical, and desired velocity.

15. The method according to claims 13 or 14, **characterized in that**
upon violation of a predetermined limit value for the at least one parameter, then:
• a first charging stage (L2);
• a second charging stage (L3),
• a mechanical charger (76),
• an electric charger,
• a first exhaust charger,
• a second exhaust charger, or
• an electric motor (36, M) in addition to the running internal combustion engine (28) and/or
• the internal combustion engine (28) in addition to the running electric motor (36, M)
is switched on or switched off.

## Revendications

1. Aéronef sans pilote (10), dont la propulsion (12) comprend un moteur à combustion (28) configuré sous la forme d'un moteur diesel et/ou kérosène comportant un moyen de chargement (30) pour le chargement du moteur, la propulsion (12) étant une propulsion hybride (32) qui comprend, outre le moteur à combustion (28), un moteur électrique (36, M) et un moyen accumulateur d'énergie pour accumuler l'énergie électrique destinée à entraîner le moteur électrique (36, M),
et dans lequel une commande (50) est prévue, qui permet de commander le moyen de chargement (30) et/ou la propulsion hybride (32) en fonction de différents paramètres dans le service aérien,
**caractérisé en ce**
**que** la commande (50) est configurée pour commander le moyen de chargement (30) et/ou la propulsion hybride (32) en fonction d'au moins l'un des paramètres parmi la dissipation de chaleur admissible, le niveau sonore de fonctionnement admissible et/ou la température, afin de réduire la signature thermique et/ou acoustique de l'aéronef (10).

2. Aéronef selon la revendication 1,
**caractérisé en ce**
**que** la commande (50) est configurée pour commander le moyen de chargement (30) et/ou la propulsion hybride (32) en outre en fonction d'au moins un des paramètres parmi l'altitude, l'angle d'un vol de décollage ou d'atterrissage par rapport à la verticale et/ou la vitesse souhaitée.

3. Aéronef selon une des revendications 1 ou 2,
**caractérisé en ce**
**que** la commande (50) est configurée pour commander l'activation et la désactivation d'un premier niveau (L2) et/ou d'un second niveau (L3) de chargement moteur et/ou l'activation et la désactivation du moteur électrique (36, M) par rapport au moteur à combustion (28) en fonctionnement et/ou l'activation et la désactivation du moteur à combustion (28) par rapport au moteur électrique (36, M) en fonctionnement, en fonction de l'au moins un paramètre.

4. Aéronef selon une des revendications précédentes,
**caractérisé en ce que**
la propulsion hybride (32) présente un moyen de couplage commutable (44) qui permet de relier le moteur à combustion (28) et/ou le moteur électrique (36, M) à un générateur de poussées (18) de manière sélective.

5. Aéronef selon une des revendications précédentes,
**caractérisé en ce**
**que** le moteur à combustion (28) et le moteur électrique (36, M) peuvent fonctionner de manière sélective en parallèle ou en série.

6. Aéronef selon une des revendications précédentes,
**caractérisé en ce**
**que** le moyen de chargement (30) est configuré pour un chargement de différents niveaux et/ou comprend au moins un premier chargeur (52) et un second chargeur (70), en particulier pour un chargement de différents niveaux.

7. Aéronef selon une des revendications précédentes,
**caractérisé en ce**
**que** le moyen de chargement (30) comprend au moins un chargeur qui peut être entraîné par de l' énergie des gaz d'échappement.

8. Aéronef selon une des revendications précédentes,
**caractérisé en ce**
**que** le moyen de chargement (30) comprend au moins un chargeur mécanique (76).

9. Aéronef selon la revendication 8,
**caractérisé en ce**
**que** l'au moins un chargeur mécanique (76) peut être entraîné par l'intermédiaire d'un arbre de sortie (62) du moteur à combustion (28) et/ou par l'intermédiaire d'un moteur électrique (36, M).

10. Aéronef selon la revendication 9,
**caractérisé en ce**
**que** le chargeur mécanique (76) peut être entraîné par l'intermédiaire du moteur électrique (36, M) de la propulsion hybride (32).

11. Aéronef selon une des revendications précédentes,
**caractérisé en ce**
**que** le moteur à combustion (28) est un moteur à piston rotatif (60).

12. Aéronef selon une des revendications précédentes,
**caractérisé en ce**
**que** l'aéronef a un poids maximum au décollage supérieur à 70 kg et en particulier supérieur à 250 kg.

13. Procédé de fonctionnement d'un aéronef sans pilote (10) selon une des revendications précédentes,
**caractérisé par** la commande d'un chargement d'un moteur à combustion (28) d'une propulsion (12) et/ou d'une coopération du moteur à combustion (28) et du moteur électrique (36, M) d'une propulsion hybride (32) en fonction d'au moins l'un des paramètres parmi l'émission de chaleur admissible, le niveau sonore de fonctionnement admissible et/ou la température.

14. Procédé selon la revendication 13,
**caractérisé par** la commande du chargement d'un moteur à combustion (28) d'une propulsion (12) et/ou de la coopération du moteur à combustion (28) et du moteur électrique (36, M) d'une propulsion hybride (32) en fonction d' au moins l'un des paramètres en fonction d' au moins l'un des paramètres parmi l'altitude, l'angle d'un vol de décollage ou d'atterrissage par rapport à la verticale et/ou la vitesse souhaitée.

15. Procédé selon la revendication 13 ou 14,
**caractérisé en ce**
**que**, en cas de dépassement des valeurs de seuil supérieure et inférieure prédéfinies pour l'au moins un paramètres :
- un premier niveau de chargement (L2) ;
- un second niveau de chargement (L3),
- un chargeur mécanique (76),
- un chargeur électrique,
- un premier chargeur à partir des gaz d'échappement,
- un second chargeur à partir des gaz d'échappement, ou
- un moteur électrique (36, M) outre le moteur à combustion (28) en fonctionnement et/ou
- le moteur à combustion (28) outre le moteur électrique (36, M) en fonctionnement
est activé ou désactivé.
